# EUROPEAN PATENT APPLICATION

(11) **EP 2 424 304 A1**
(43) Date of publication of application: **29.02.2012**
(21) Application number: 10174067.8
(22) Date of filing: 25.08.2010
(51) Int. Cl.: H04W 48/12, H04W 56/00, H04W 84/18, H04W 72/12

(54) **Method and network manager device for scheduling a transmission of messages within a wireless network**

(71) Applicant: NXP B.V., 5656 AG Eindhoven (NL)
(72) Inventor: Philips, Norbert, 5656, AE Eindhoven (NL); Thoen, Steven Mark, 5656, AE Eindhoven (NL); Claessens, Valentin, 5656, AE Eindhoven (NL)
(74) Representative: Krott, Michel

(57) **Abstract**

It is provided a method and a network manager device for scheduling a transmission of messages within a wireless network, the method comprising: scheduling a transmission of a first beacon message (535) to be transmitted by a first network device (101) within a first transmission frame (530), the first network device being comprised in the network; scheduling a transmission of a second beacon message (542) to be transmitted by a second network device (102, 103) within a second transmission frame (533), the second network device being comprised in the network, wherein the second transmission frame is to be transmitted after the first transmission frame and has to have a length equal to a length of the first transmission frame, wherein the first beacon message is to be started at a beacon start time relative to a start time of the first transmission frame and wherein the second beacon message is to be started at the beacon start time relative to the start time of the second transmission frame.

## Description

### FIELD OF THE INVENTION

The present invention relates to a method and to a network manager device for scheduling a transmission of messages within a wireless network, such as a radio frequency communication network employing magnetic inductance and/or electromagnetic wave communication technology. In particular, the present invention relates to a method and to a network manager device for scheduling a transmission of beacon messages which may be employed to announce a presence of a particular device which has joined or which is present in the wireless network.

One or more network devices comprised in a wireless network may transmit so-called beacon messages such as to announce to other network devices present in the network their presence and such as to enable a network manager device (which may be an ordinary network device that created the network) to monitor the network configuration, in particular to monitor which network devices (in particular identified by an ID) are (still) comprised in the network. Further, beacon messages may be used for synchronization purposes of all network devices with the network manager device.

### BACKGROUND OF THE INVENTION

US 2008/0240055 A1 discloses a wireless network beacon timing apparatus and method, wherein multiple personalities of the wireless network are identified, wherein a beacon type is assigned for each of the personalities. During each transmission interval a plurality of beacon types are consecutively transmitted by a given access point which may be formed by a network device. The beacon types transmitted by the given access point are clustered and another access point may transmit different beacon types within another cluster and at a later point in time. Thereby, the distance between the clusters transmitted by the first access point and the clusters transmitted by the second access point can vary depending on the channel occupation and on the result of the CSMA/CA channel access mechanism. In particular, channel access to transmit beacons from different network devices is not scheduled.

US 2009/0003253 A1 discloses a method of an access node of a wireless network controlling beacon transmission. Thereby, the access node detects a presence of a client device and the access node controls air-time of beacon transmission based on whether the access node detects the presence of a client device. Herein, beacons transmitted from a same network device may be transmitted repetitively having a DTIM time interval in between. The DTIM interval may be increased, when devices are in sleep mode or in standby mode.

US 2006/0104251 A1 discloses a beacon scheduling method in a wireless sensor network system which may avoid beacon collisions. Herein, a coordinator sends beacons in a cycle which may be received by at least one device. A beacon is sent to the device in a time period which is selected based on beacon information received from the coordinator.

### OBJECT AND SUMMARY OF THE INVENTION

There may be a need for a method and for a network manager device for scheduling a transmission of messages within a wireless network, in particular for scheduling a transmission of beacon messages within the wireless network which provide a low protocol overhead when creating a multi-cluster wireless network, which also provide low protocol overhead when monitoring the topology of such a network and organizing the communication of network management (control) messages through system control channels between hidden devices via one or more hops. In particular, there may be a need for a method and for a network manager device for scheduling a transmission of messages to be applied to a multi-cluster wireless network in which some wireless devices can only communicate with each other via one or more routing or router devices. Thus, there may be a need for a scheduling method which enables automatically monitoring the network configuration without using timeslots in transmission frames that are used for regular communication messages between different network devices.

According to an embodiment a method for scheduling a transmission of messages within a wireless network is provided which enables monitoring the network configuration with low protocol overhead compared to a conventional method, for example as indicated above (background of the invention), and which enables granting access to the system control channels for network devices that have joined the existing network, while collisions of network control messages may be avoided.

In particular, the method for scheduling a transmission of messages within a wireless network may be applied for ultralow power multi-cluster wireless networks. In particular, the proposed method may reduce the overhead for monitoring the network configuration, thus improving the efficiency of the communication network, wherein network devices may in particular comprise a hearing aid which may be carried behind an ear of a human.

According to an embodiment the method for scheduling a transmission of messages within a wireless network comprises scheduling a transmission of a first beacon message to be transmitted by a first network device within a first transmission frame, the first network device being comprised in the network; scheduling a transmission of a second beacon message to be transmitted by a second network device within a second transmission frame, the second network device being comprised in the network, wherein the second transmission frame is to be transmitted after the first transmission frame and has to have a length equal to a length of the first transmission frame, wherein the first beacon message is to be started at a beacon start time relative to a start time of the first transmission frame and wherein the second beacon message is to be started at the beacon start time relative to the start time of the second transmission frame.

The scheduling of the transmission of the first beacon message and the second beacon message may comprise setting up a plan for transmission of the first beacon message and the second beacon message which may in particular depend on a total number of network devices which may be comprised within the wireless network. Different types of network devices may exist, like slave devices, network access points, routers, bridges, network managers or hybrid devices (devices than can operate in two or more of the previous configurations). The first network device and the second network device may be devices of a same type or of different types, as long as they have capabilities for the wireless transmission of a message and the wireless reception of a message and they are allowed to transmit beacon messages. Any wireless technology may be applied for transmission and/or reception of messages communicated between the first network device and the second network device, such as magnetic inductance technology or radio frequency electromagnetic wave based technology. The scheduling of the transmission of the first beacon message and the second beacon message may be performed by one of the first network device and the second network device or may be performed by a still further network device which may also be referred to as network manager device. In particular, one of the first network device and the second network device may be the network manager device.

Scheduling the transmission of the first beacon message and the second beacon message may comprise defining or setting up a start time for sending the first beacon message and a start time for sending the second beacon message and may also comprise defining or setting up a time duration during which the first beacon message is sent and/or setting up a time duration during which the second beacon message is to be sent.

The first beacon message and the second beacon message may be messages to announce the presence of the respective network devices to other network devices comprised in the network. One or more network devices comprised in the network (for example the first network device or the second network device) may receive the first beacon message and/or the second beacon message to in particular monitor the network configuration of the wireless network.

The communication within the network may be performed by transmitting messages in so-called transmission frames (also called superframes) comprising messages sent during a particular time interval within the transmission frame. According to another embodiment a length of the transmission frame may represent a data amount comprised in one transmission frame. The first transmission frame may comprise messages sent by different network devices, such as sent by the first network device and/or the second network device. However, within the first transmission frame (or the second transmission frame) a message transmitted by the first network device is not simultaneously (during a same or overlapping time duration) transmitted with a message transmitted by the second network device. The second transmission frame may comprise messages (not overlapping with control time slots) transmitted by the first network device and/or the second network device which are transmitted later than the messages transmitted which are comprised in the first transmission frame. Thus, the second transmission frame is transmitted later than the first transmission frame, in particular immediately after the first transmission frame, such that in particular an end time of the first transmission frame equals a start time of the second transmission frame.

In particular, the first transmission frame and the second transmission frame may have a same structure defining one or more timeslots in each transmission frame (such as 256 timeslots, each timeslot corresponding to a predetermined time interval, such as 200 µs - 500 µs). A length of the first transmission frame may correspond to a time duration of the first transmission frame which may amount for example to between 50 ms and 100 ms according to an exemplary embodiment. According to other embodiments the length of the first transmission frame may correspond to a data amount comprised in messages transmitted during or within the first transmission frame. A similar definition may apply also to the length of the second transmission frame or the length of any other transmission frame.

The beacon start time relative to a start time of the first transmission frame may be determined as a difference between a start time of the first beacon message and the start time of the first transmission frame. At the same time the beacon start time equals the difference between a start time of the second beacon message and the start time of the second transmission frame. Thus, transmission of the first beacon message is scheduled to be started at a same time (i.e. the beacon start time) relative to the start time of the first transmission frame as the second beacon message is to be started relative to the start time of the second transmission frame. In other words, the first beacon message starts at a same timeslot in the first transmission frame as the second beacon message starts in the second transmission frame.

According to an embodiment a problem may be diminished, when a number of network devices comprised in the network increases, because an available payload capacity may not be reduced, since an amount of beacon messages or a total time duration of beacon messages transmitted within a given transmission frame may not increase, when the number of network devices comprised in the network increases. According to an embodiment a predetermined payload data capacity may be guaranteed independent of the number of active devices comprised in the network. In particular, transmission of messages is scheduled such that the messages, in particular the beacon messages, are to be transmitted during successively arranged transmission frames having a same transmission frame structure.

In particular, within successive transmission frames the first network device may transmit its first beacon message in an alternating manner with the second network device transmitting its second beacon message, such that in a given transmission frame the first network device transmits its first beacon message starting at a particular timeslot (such as the first timeslot) and in the following transmission frame the second network device transmits its second beacon message at the same timeslot within the next transmission frame. The transmission of further transmission frames may be performed in a cyclic or repetitive manner. Alternatively transmitting beacon messages may also be referred to as rotating beacon scheduling concept. Thereby, each network device may transmit its beacon message (also referred to simply as beacon) according to a given schedule in the same timeslot of a transmission frame (also referred to as superframe), for example in the first timeslot. The schedule may then for example be determined in such a way that the beacon transmit frequency of each active network device has a given minimum level (e.g. 1/8 of the superframe rate) and that the beacon transmit rate is nearly the same for all active network devices.

According to an embodiment the first beacon message comprises information indicative of an identity of the first network device and/or the second beacon message comprises information indicative of an identity of the second network device. Further, the first beacon message and/or the second beacon message may comprise information indicative of a superframe ID (sequence number), a device ID (device identification), a device type, a device address and/or a device handle. Reception of the first beacon message and/or the second beacon message (and possibly a number of further beacon messages) may enable a particular device, such as a network manager device, to monitor the network configuration.

According to an embodiment the first beacon message has a same length as the second beacon message. The length of a message, in particular a beacon message, such as the first beacon message and/or the second beacon message, may indicate a time duration during which the respective message is to be transmitted or is transmitted. Alternatively, the length of a message, in particular a beacon message, may be indicative of a data amount, such as measured in a unit of bytes or bits, comprised in the respective message. In particular, a length of a message may be defined as a number of timeslots having a predetermined timeslot duration.

According to an embodiment the method for scheduling a transmission of control messages further comprises scheduling a transmission of a first control message to be transmitted by the first network device within the first transmission frame and to be started at a control start time relative to the start time of the first transmission frame, the first control message containing information directed to the second network device, the information in particular being indicative of a request of the first network device to communicate with the second network device. Thus, the first control message is scheduled to be transmitted by the first network device within the same transmission frame (i.e. the first transmission frame) within which the first beacon message is scheduled to be transmitted by the first network device. However, the first control message should be scheduled to be transmitted at the control start time which is different from the beacon start time. Thereby, the transmission of the first beacon message will not overlap with the transmission of the first control message. The control start time relative to the start time of the first transmission frame may be calculated as a difference between the start time of the first control message and the start time of the first transmission frame. Thus, a given network device, such as the first network device, may transmit the first beacon message as well as the first control message in a same transmission frame, namely the first transmission frame. This scheduling method may ensure avoiding collisions between control messages transmitted by different network devices, without requiring extra data capacity (time slots) of the communication frame.

According to an embodiment the method for scheduling a transmission of messages further comprises using the control message to schedule the allocation of additional time slots for the transmission of other communication messages (for example user data) generated by the first network device and directed to the second network device to be transmitted by the first network device within further transmission frames and to be started at a first communication start time relative to the start time of the further transmission frames. The communication messages should be scheduled to be transmitted at a communication start time which is different from the first (or second or any further) beacon start time and from the first (or second or any further) control message start time. Thereby, the transmission of the communication messages will not overlap with the transmission of the first (or second or any further) beacon message and the first (or second or any further) control message. Thus, the communication message to be transmitted by the first network device may be scheduled to be transmitted in any further transmission frame, independent of the beacon scheduling.

According to an embodiment the method for scheduling a transmission of messages further comprises scheduling a transmission of a second control message to be transmitted by the second network device within the second transmission frame and to be started at the control start time relative to the start time of the second transmission frame, the second control message containing information indicative of a request of the second network device to communicate with the first network device, wherein in particular the second control message has a length equal to a length of the first control message. Thus, also the second network device may be instructed to transmit the second control message in a same transmission frame (i.e. the second transmission frame) in which also the second beacon message is scheduled to be transmitted by the second network device. Further, transmission of the second control message is scheduled to be started at a same timeslot (i.e. the same control start time relative to the start time of the second transmission frame) as the timeslot at which the first control message is scheduled to be transmitted by the first network device within the first transmission frame. In particular, to avoid message collision, the control start time is different from the beacon start time. Again, the length of the control message may be indicative of a time duration or number of timeslots during which the control message, such as the first control message and/or the second control message, is scheduled to be transmitted.

In particular the first beacon message may comprise information indicative of whether the second network device is allowed to transmit the second control message within the first transmission frame at another control start time relative to the start time of the first transmission frame, the other control start time being different from the control start time at which the first control message is scheduled to be transmitted by the first network device within the first transmission frame. In particular, the first network device may have full control of the usage of control messages transmitted starting at the control start time and/or further control start time(s) within the first transmission frame. The control message(s) transmitted starting at the control start time(s) may be transmitted by only the first network device, the first network device and the second network device or by none of the network devices depending in information comprised in the first beacon message.

According to an embodiment the method for scheduling a transmission of messages further comprises scheduling the transmission of the first beacon message and scheduling the transmission of the second beacon message to be performed in an alternating manner such that the first beacon message is scheduled to be transmitted by the first network device within a further transmission frame after the second transmission frame and to be started at the beacon start time relative to a start time of the further transmission frame. Also, the scheduling may be performed such that the second beacon message is scheduled to be transmitted by the second network device within another further transmission frame after the second transmission frame and different from the further transmission frame and to be started at the beacon start time relative to a start time of the another further transmission frame. Thereby, a network configuration may be continuously monitored, since beacon messages are transmitted (by different network devices) in every transmission frame.

According to an embodiment the method for scheduling a transmission of messages further comprises scheduling a transmission of a further beacon message to be transmitted by a further network device within the further transmission frame and to be started at the beacon start time relative to the start time of the further transmission frame, the further network device being comprised in the network; and rescheduling the transmission of the first beacon message not to be transmitted within the further transmission frame. In particular, this situation may occur, when the further network device joins the network previously comprised only of the first network device and the second network device. In this situation the first network device may be instructed (via the scheduling) to stop transmitting its first beacon message within a particular transmission frame (i.e. the further transmission frame), since the further beacon message is scheduled to be transmitted by the further network device within the further transmission frame. Thus, message collision may be avoided, while still enabling monitoring the (changed) network configuration.

According to an embodiment rescheduling of the transmission of a beacon message is only performed for the first network device but not for the second network device, when the further network device joins the network. Thus, the second network device may continue transmitting its second beacon message during another further transmission frame. Thereby, the scheduling method may reduce the need of rescheduling or reconfiguration of network devices for transmitting their beacon messages (and/or control messages), since only transmission of messages to be transmitted by one (nor two or more) particular network device may by rescheduled when a new network device joins the network. Thereby, efficiency of the method and of the communication network may be improved.

According to an embodiment the transmission of beacon messages is scheduled to be performed in a repetitive manner having a repetition period, being the sum of the lengths of the transmission frames repetitively transmitted, (also referred to as hyperframe) established by a number of consecutive transmission frames (scheduled to be consecutively transmitted) such that a number of beacon messages scheduled to be transmitted within the repetition period by each network device comprised within the network is at least one. For example, when four network devices are present within the network the number of transmission frames constituting the repetition period or hyperframe may be at least four. According to an embodiment, the number of transmission frames constituting a hyperframe is at least equal to or greater than a number of network devices comprised within the wireless network. In particular, if only one network device, such as the first network device, is comprised within the network, the first network device may be scheduled to transmit the first beacon message in every transmission frame comprised in the hyperframe. If the network is comprised of the first network device and the second network device, the first network device may be instructed to transmit the first beacon message in every other transmission frame, as may also the second network device be instructed to transmit the second beacon message in every other transmission frame in an alternative manner with the first network device. If more and more network devices join the network, network devices previously comprised in the network may be instructed to stop transmitting their beacon message in particular transmission frames in which one or more of the additional network devices are instructed to transmit their beacon messages.

According to an embodiment a method of a transmission of messages within a wireless network is provided, wherein the method comprises scheduling the transmission of messages according to one of the embodiments of a method for scheduling a transmission of messages within a wireless network described above; and transmitting the messages according to the scheduling. Thereby, transmitting the messages is effectively performed, involving radiating a physical signal, such as a radio signal, a magnetic induction signal or the like, from one network device to another network device. Further, the transmitted message may be received at or by another network device.

According to an embodiment a network manager device for scheduling a transmission of messages within a wireless network is provided, wherein the network manager device comprises a transmitter for transmitting a scheduling message and a processor. Thereby, the processor is configured for scheduling the transmission of the messages within the wireless network comprising a first network device and a second network device and is configured for generating the scheduling message based on the scheduling, wherein the processor is further adapted such as to schedule a transmission of a first beacon message to be transmitted by the first network device within a first transmission frame; and to schedule a transmission of a second beacon message to be transmitted by the second network device within a second transmission frame, wherein the second transmission frame is to be transmitted after the first transmission frame and has to have a length equal to a length of the first transmission frame, wherein the first beacon message is to be started at a beacon start time relative to a start time of the first transmission frame and wherein the second beacon message is to be started at the beacon start time relative to the start time of the second transmission frame.

It should be understood that any feature or any features (individually or in any combination) disclosed, explained and/or described with respect to embodiments or upon embodiments of a method for scheduling a transmission of messages within a wireless network may also be applied, employed or used for (individually or in any combination) one or more embodiments of a network manager device for scheduling a transmission of messages within a wireless network or a communication system as described below. The network manager device may for example be the first network device or the second network device or may be any other network device enabled for communicating messages. In particular, the network manager device may be a same device type as or a different device type from the first network device and/or the second network device. In particular, the network manager device may be a same network device type as the first network device and/or the second network device, and the network manager device may be that device which founded or established the network, such as the first device in the network, while other devices may join the established network after the network manager device established the network.

According to an embodiment a communication system is provided (in particular a wireless communication system), wherein the system comprises at least one network manager device according to an embodiment as described above; and at least one other network device configured to receive a scheduling message transmitted by the network manager device and capable to transmit a message according to the received scheduling message. In particular, the network manager device and/or at least one other network device may be a hearing aid or a medical device implanted in or carried at a human being. In particular, one or more symmetrical links may be established within the communication system between two different network devices or between the network device and the network manager device such that one network device is enabled to transmit a message to another network device and the other network device is enabled to receive the message and is also enabled to transmit another message to the first network device.

According to an embodiment all network devices comprised in the network may transmit a beacon using the same timeslot based on a TDMA (time division multiplexing access) like scheduling mechanism. This scheduling method may also be used to grant access to the superframe timeslots assigned for exchanging network management messages (such as control messages) between devices. In this way a given access frequency to these channels may be guaranteed without the risk of having collisions with messages from other devices.

According to embodiments the following advantages may be offered which may be specifically important for ultralow power wireless devices:
- low protocol overhead to create multi-cluster wireless networks and to monitor the wireless network topology
- wireless devices must only listen to one timeslot in the transmission frame for detecting all available network devices within their receive range
- all network devices transmit network management messages via the same timeslots
- collisions between network management messages may be avoided
- changes in the network topology may be detected easily by monitoring the shared beacon timeslot.

### BRIEF DESCRIPTION OF THE DRAWINGS

Embodiments of the present invention will now be described with reference to the accompanying drawings.
Fig. 1A illustrates a single cluster network topology and Fig. 1B illustrates a multi-cluster network topology;
Fig. 2 illustrates a network layer representation of the network topology shown in Fig. 1B;
Fig. 3 illustrates a heterogeneous wireless network;
Fig. 4 schematically illustrates a superframe (also referred to as transmission frame) according to an embodiment; and
Fig. 5 schematically illustrates a superframe structure or transmission frame structure according to an embodiment.

Examples of network topologies according to embodiments are described below. A wireless network is created with the aim to enable bi-directional communication between the different devices that have joined the network.

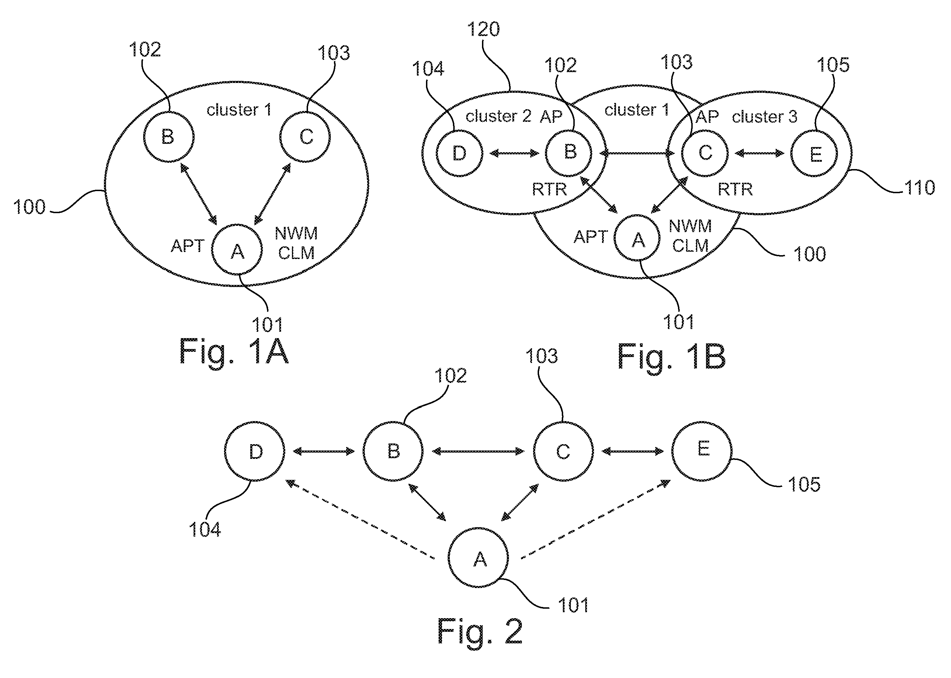

When all devices within a wireless network 100 can communicate directly with each other, we call it a single cluster wireless network 100. An example of such a network is shown in Fig. 1A. The devices 101, 102, 103 that have joined the network 100 are identified by the letters A, B and C. The bi-directional arrows indicate possible communication flows. For this example it is assumed that device A has created the wireless network. Therefore it has become the network manager (NWM), the clock master (CLM) and an access point (APT) of the network.

A cluster is defined as a collection of devices that can talk directly to each other in both directions. This property is dependent on the characteristics of the physical layer, the distance between the devices, and possible obstacles in the wireless channel. The cluster concept can be used in a graphical representation as shown in Fig. 1A to indicate which devices are in range of each other and which devices are out of range.

If devices B and C are hybrid devices, they can become additional access points for network cluster 1. When this function is activated, devices that are out of range for device A can still join the network via devices B or C. An example of such a network configuration is shown in Fig. 1B. In this case, device D can join the network via access point B and device E can join the network via access point C. When their join request is granted we get a multi-cluster wireless network, consisting of 3 network clusters 100, 110, 120. Cluster 100 contains devices A, B and C, cluster 120 contains devices B and D and cluster 110 contains devices C and E. In this case device B will be the router for messages between devices A and D and device C will be the router for messages between devices A and E.

When device D wants to send a message to device E, two routers are needed: device B and device C. The device list of device D will contain an entry for device E, with device B as 'first hop' and a hop count of 2.

Devices B and C will synchronize their local reference oscillator and time base with the master clock of the clock manager (device A). Devices D and E will synchronize their local reference oscillator and time base with the frames transmitted respectively by devices B and C. As a result they will be synchronized also (indirectly) with the master clock of the network clock manager.

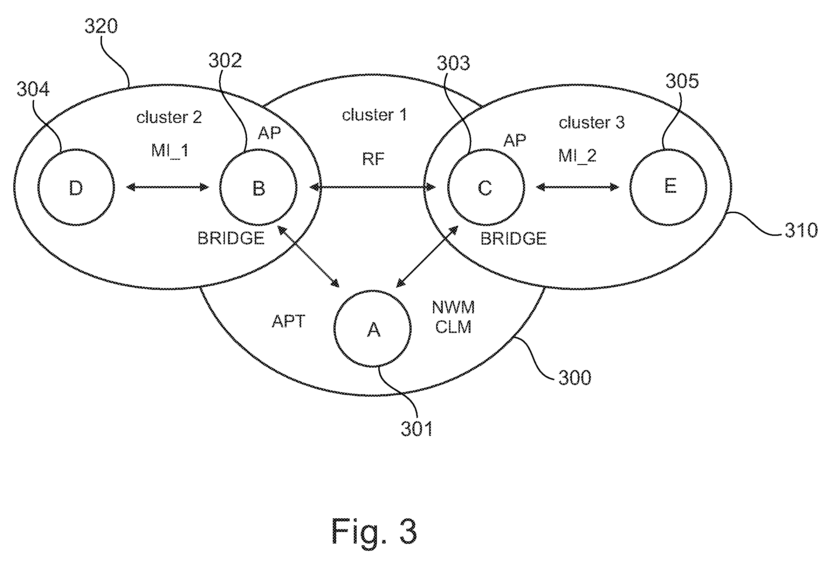

A multi-cluster network as shown in Fig. 1B can also be a heterogeneous wireless network. This is for example the case when cluster 1 uses a physical layer with an RF radio and clusters 2 and 3 use a physical layer with an MI radio, as shown in Fig. 3. When devices B and C have both physical layers and act as a bridge, one overall network of interconnected devices can be obtained in a similar way as for multi-cluster networks.

The network protocol layer will make abstraction of PHY-specific network identifications like single cluster, multi-cluster or heterogeneous networks. Instead the communication relationships between devices will be characterized in terms of neighbors, next hops and hop counts. The available communication links between the different devices will be shown explicitly and characterized as being symmetrical or asymmetrical. No distinction will be made between multi-cluster networks and heterogeneous networks except by identifying router devices as routers or as bridges.

A network topology can be represented as shown by the example in Fig. 2. It represents the multi-cluster or heterogeneous network of Fig. 1B.

From this viewpoint, device B has devices A, C and D as neighbors, while it can reach device E via 'next hop' device C with one hop count.

A line with two arrows indicates that the link is symmetrical, e.g. device D can receive data from device B and device B can receive data from device D. When the link is asymmetrical a line with one arrow is used, e.g. device D can receive data from device A but device A can not receive data from device D. The arrow indicates in which direction a connection can be made. A dotted line is used to indicate that the link is not reliable. It means that device D might receive (now and then) valid beacons from device A but that a data stream from A to D might contain errors or even be interrupted regularly. According to an embodiment the scheduling may be employed in a heterogeneous wireless network. The protocol processor can operate with either an MI-based PHY or an RF-based PHY, or with both PHYs together.

A multi-cluster network in which not all clusters use the same radio technology is called a heterogeneous wireless network. An example of such a network is shown in Fig. 3. In order to make this heterogeneous network fully connected, there should be at least one device with both physical layers integrated and this device should be in range with both the MI network and the RF network. Such a device is called a bridge.

For the network topology shown in Fig. 3, device B (302) is the bridge between cluster 1 (300) and cluster 2 (320) and device C (303) is the bridge between cluster 1 (300) and cluster 3 (310). These bridges will also route messages between devices in the MI clusters and devices in the RF cluster. Bridge devices will have two protocol stacks running in parallel: one for the MI cluster and one for the RF cluster.

Since the RF cluster and the MI clusters use a different radio technology, they will use communication channels that will not interfere with each other. Therefore each cluster needs its own network manager. For the example shown in Fig. 3, device A (301) is the network manager (NWM) and the clock master (CLM) of cluster 1 (300), the RF cluster. Since the MI clusters use a different communication channel, they need a separate network manager to manage the scheduling of superframes (also referred to as transmission frames) in that cluster. If latency-controlled communication is needed between devices in different clusters (e.g. from device A to devices D and E), the superframes used in the MI clusters should be synchronized with the superframes used in the RF cluster. Therefore it is preferred (or even needed) that the bridge devices B and C synchronize their reference clock with the incoming RF frames and that they act as network manager for the MI cluster to which they belong.

When devices B and C are not in range of each other, MI clusters #2 (320) and #3 (310) can work independently as two single cluster networks. If, on the other hand, devices B and C can have bi-directional communication, the MI network will be configured as a multi-cluster network with only one MI network manager (e.g. device B). Nevertheless, both devices B and C can still be used as bridge and as router.

The heterogeneous network shown in Fig. 3 can also be represented by the network layer representation shown in Fig. 2. The only difference is that the dotted arrows between device A and devices D and E will not be present since they have incompatible physical layers, and that devices B and C will be called 'bridges' instead of 'routers'.

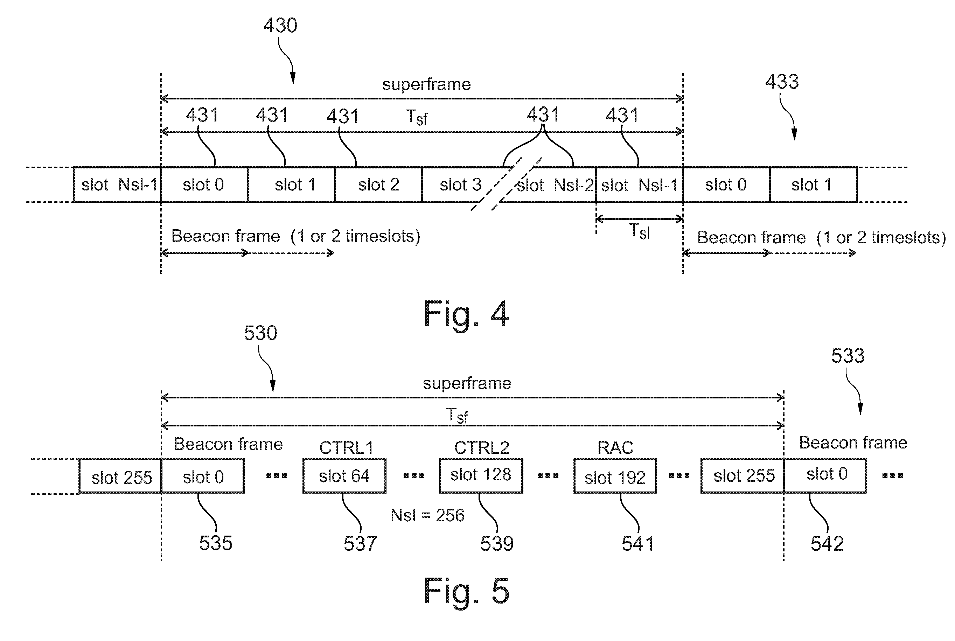

According to an embodiment network channels may be defined and employed during communication in the network (see also Figs. 4 and 5 and further description below).

Within a superframe or transmission frame, communication channels will be created to enable transmission of control messages for network management tasks like the creation, the management and the monitoring of a wireless network. Next to these channels, the host processor can request channel capacity to exchange user messages and user data between devices. Following channel types are defined:
The PHY channel (PhyChan) is the frequency channel used by the physical layer to transmit information between devices. For typical implementations an MI physical layer will support only one communication channel, while an RF physical layer can select between different communication channels.
The default PHY channel is the PHY channel that will be used by hybrid devices to create a new network when no other network is available. Slave devices will monitor this channel in carrier detect mode when no active network could be found. When more than one PHY channel can be used (e.g. in case of an RF PHY), the channel manager has to select the default PHY channel and communicate it to all other devices in the network.

The beacon channel starts in timeslot 0 (or any other time slot) of a superframe. It is used to transmit beacon frames (also referred to as beacon messages) that contain the address of the device that is transmitting the beacon, the address of the network manager, and the timeslots allocated to the random access channel and the control channel. This information is needed for devices that want to join the network. Beacon frames are also used to monitor the presence of devices.

The random access communication (RAC) channel can be used by devices to send a join request or a pairing request to a network access point. It can also be used by joined devices that have no access to the control channel for sending messages to other devices within the network. Only devices that transmit beacons listen to the RAC channel. Since any device can use the RAC channel at any time, collisions might occur. Therefore, devices using the RAC channel will typically use data frames with immediate ACK to verify if their message has been received. In case no ACK is returned, a retry mechanism with random back off can be used.

The control channel is a connection-less communication (CLC) channel that can be used by to send messages (also referred to as control messages) to other devices within the network. Only devices transmitting a beacon (message) can use the control channel or allow others devices to use it. If in a given superframe (or transmission frame) the control channel is not used for sending control messages, this can be indicated in the beacon so that other devices can use the available timeslots as a RAC channel for sending messages to the device that is transmitting the beacon.

User channels are used for making a connection between two devices and for sending user data from the source device to the destination device. When both devices are neighbors, only one channel is needed. In case an intermediate router is needed, two channels are required: one from the source device to the router and one from the router to the destination device. Typically the host processor of a source device requests a connection with a destination device. The allocation of user channels to this connection will be handled by the protocol processor of the devices that are needed to create the connection.

According to an embodiment a network configuration change may be monitored as described below.
According to an embodiment beacon scheduling is performed for monitoring network configuration. When a device (hybrid or slave) joins a wireless network, it will detect when other joined hybrid devices come into its range or get out of its range by continuously monitoring the received beacons.

To organize and optimize the communication of MAC and Network control messages between devices in a wireless network, and to enable the discovery of devices out of range for the Network Manager, a rotating beacon concept has been defined and implemented according to an embodiment. This means that not only the Network Manager will transmit a beacon but also all other hybrid devices.

Only a device that transmits a beacon will be allowed to use the control channel for transmitting control messages to other devices. In this way, collisions are avoided. In addition, by monitoring the reception of the beacons from the different devices, a change of the network configuration can be detected.

Only hybrid devices (that can transmit messages and also receive messages) will receive a beacon schedule. For power efficiency reasons it is advised to configure (audio) source devices as hybrid devices and (audio) sink devices as slave devices. In general, such slave devices have very little information to transmit and therefore they will not receive a beacon schedule. Slave devices can use the RAC channel for sending protocol-related control messages to other devices.

When a hybrid device A creates a network, it promotes itself to Network Manager (device) and it starts transmitting beacons and in every superframe (also called transmission frame). When a second hybrid device B wants to join the network, it will use the RAC channel for sending a join request to device A. When the join request is granted, Network Manager A will instruct device B to transmit a beacon in e.g. the odd superframes while the Network Manager itself will transmit a beacon in the even superframes only. From that moment onwards device B can use the control channel for sending protocol-related control messages to device A instead of using the RAC channel. New devices can detect both beacons and can therefore also send a join request to device B.

For the beacon scheduling a hyperframe comprising 8 (or 4 or 6 or 10 or any other number) transmission frames is defined according to an embodiment. A hyperframe starts when mod(SuperframeID,8)=0. The beacon scheduling of a device can be indicated by a bit field of 8 bits, with each bit identified by a bit index in the range 0..7. A device is allowed to transmit a beacon when bit[mod(SuperframeID,8)] = 1.

When a new hybrid device joins the network, the Network Manager can determine the beacon scheduling for this device according to a given algorithm (see below) and send the resulting 8 bit beacon scheduling field to the target device. The scheduling algorithm illustrated below is defined in such a way that the beacon scheduling sequence of only one device has to be modified when a new device is added in the loop.

The proposed beacon scheduling algorithm for hybrid devices will be clarified by means of the example shown in Table 1 below. Assume device A is the first device that is switched on. It does not detect an existing network and it decides to create its own network cluster. The initial beacon scheduling for device A is given by BcnA = Ob1111 1111 (in the bit field representation a space is inserted to increase readability).

When device B joins, the beacon transmissions will be divided evenly between devices A and B. Device A will change its own beacon scheduling to BcnA = 0b0101 0101 and device B will receive beacon scheduling BcnB = Ob1010 1010.

According to an embodiment a beacon transmission sequence for a network of 1 to 8 hybrid devices may be scheduled according to table 1 below, wherein SF ID denotes the number of the superframe (running from 0 to 7 in a hyperframe consisting of 8 transmission frames).

**Table 1:**

| **Devices** | **1** | **2** | **3** | **4** | **5** | **6** | **7** | **8** |
|---|---|---|---|---|---|---|---|---|
| **SF ID** | **(A)** | **(+B)** | **(+C)** | **(+D)** | **(+E)** | **(+F)** | **(+G)** | **(+H)** |
| 0 | A | A | A | A | A | A | A | A |
| 1 | A | B | B | B | B | B | B | B |
| 2 | A | A | A | D | D | D | D | D |
| 3 | A | B | C | C | C | C | C | C |
| 4 | A | A | A | A | A | A | A | H |
| 5 | A | B | B | B | B | B | G | G |
| 6 | A | A | A | D | E | E | E | E |
| 7 | A | B | C | C | C | | F | F |

When device C joins, the Network Manager (device A) will ask device B to modify its beacon scheduling into BcnB = 0b0010 0010 and provide device C the beacon scheduling BcnC = 0b1000 1000. It is decided to reduce the number of beacons for device B and not for device A, since device A is the Network Manager. Since only 3 devices are involved, it is not possible to have a uniform beacon schedule distribution in a hyperframe period of 8 transmission frames.

When device D joins, the network manager (device A) will reduce its beacon count from 4 to 2, and allocate the 2 released periods to device D. Now the distribution is uniform again.

This procedure can be continued in a similar way when more hybrid devices join the network, as shown in Table 1. It is assumed that a maximum period of 8 transmission frames will cover all practical use cases. In addition, when the repetition period of a beacon would be higher than 8 transmission frames the communication latency of link control messages transmitted via the CLC channel would become too high. When more than 8 hybrid devices join the network, only 8 of them will receive a beacon schedule.

The number of beacons to be transmitted by each device for a network of 1 to 8 hybrid devices may be allocated as described above and illustrated in Table 2 below according to an embodiment.

**Table 2:**

| **Devices** | **1** | **2** | **3** | **4** | **5** | **6** | **7** | **8** |
|---|---|---|---|---|---|---|---|---|
| | **(A)** | **(+B)** | **(+C)** | **(+D)** | **(+E)** | **(+F)** | **(+G)** | **(+H)** |
| A | 8 | 4 | 4 | 2 | 2 | 2 | 2 | 1 |
| B | | 4 | 2 | 2 | 2 | 2 | 1 | 1 |
| C | | | 2 | 2 | 2 | 1 | 1 | 1 |
| D | | | | 2 | 1 | 1 | 1 | 1 |
| E | | | | | 1 | 1 | 1 | 1 |
| F | | | | | | 1 | 1 | 1 |
| G | | | | | | | 1 | 1 |
| H | | | | | | | | 1 |

Table 2 shows the number of beacons transmitted in a hyperframe with a size of 8 superframes, for 1 to 8 hybrid devices in the network. It can be noticed that the beacon scheduling algorithm adjusts automatically the beacon transmission density, depending on the number of hybrid devices that have joined the network.

Fig. 4 schematically illustrates a transmission frame (also referred to as superframe) 430 comprising a number of timeslots 431 according to an embodiment. Exemplary parameters of the superframe 430 are given in Table 3 below. The superframe 430 has a certain length corresponding to a time duration during which the timeslots 431 are transmitted. During different timeslots different messages may be transmitted by different network devices. According to an embodiment 256 timeslots are comprised in each superframe. After transmission of the superframe 430 a further superframe 433 is transmitted immediately adjacent to the superframe 430. Thus, an end time of the superframe 430 equals a start time of the superframe 433.

**Table 3:**

| | Transmission frame parameter | | Example of default values |
|---|---|---|---|
| | Channel rate MI radio | | 298 kbps |
| | Timeslot length | | 96 channel bits |
| | Timeslot duration | | Tsl = 322.15 µs |
| | Number of timeslots per | | Nsl = 256 (= max. nr of |
| superframe | | timeslots) | |
| | Default superframe length | | Tsf = Nsl*Tsl = 82.47 ms |
| | Alternative superframe lengths | | Tsf = 32*k*Tsl with k = 1..8 |

Fig. 5 schematically illustrates a superframe 530 and a structure of different message types comprised in the superframe 530. In particular, the transmission frame 530 comprises a beacon message 535, a first control message 537, a second control message 539, a random access channel (RAC) 541 and further not explicitly illustrated messages, such as communication messages. In particular, the beacon message 535 may have a duration corresponding to one or two timeslots, as is also indicated in Fig. 4. The beacon message 535 comprises a superframe index (superframe ID) and information indicative of an identity of the network device which transmits the beacon message. Only one network device, such as one of the network devices 101, 102 or 103 illustrated in Fig. 1A transmits the beacon message 535, while the other network devices transmit their beacon messages in other transmission frames, one of which may be the further transmission frame 533 immediately following the transmission frame 530. In particular, one of the other network devices transmits its beacon message in the beacon frame 542 within the further transmission frame 533, wherein the beacon frame 542 starts at a same beacon start time relative to the further transmission frame 533 as the beacon 535 starts relative to the transmission frame 530. Thereby, a portion of timeslots occupied by the beacon messages transmitted by different network devices may be restricted to the first timeslot or the first two timeslots in every transmission frame or transmission frame.

The control messages 537 and 539 are transmitted by the same network device that also transmits its beacon message within the transmission frame 530. Other network devices transmit their control messages during that transmission frame in which they also transmit their beacon message.

According to an embodiment the medium access control (MAC) protocol may use 3 dedicated channels having the following parameters:
- Beacon channel: 1 frame/transmission frame
- Frame length = 1 timeslot, starts always @ slot0
- Control channel: 2 frames/transmission frame
- Frame length = 2 timeslots
- CTRL1 frame starts @ timeslot Nsl/4, CTRL2 frame starts @ timeslot 2*Ns1/4
- Random Access Communication channel: 1 frame/transmission frame
- Frame length = 2 timeslots, starts at @ timeslot 3*Ns1/4

According to an embodiment a beacon or beacon message may be used to announce the presence of hybrid devices in the network; a control channel may be used for communicating protocol control messages / housekeeping, used by joined devices only, used for scheduled access without collisions when used for sending messages and used as RAC channel when free (indicated in beacon). A RAC channel may be used for communicating protocol control messages / housekeeping by slave devices and by new devices that want to join network. In a RAC channel collisions are possible.

According to an embodiment, fields of the beacon message may comprise:
- CFA : Control Field Active flags
- SFLen : length of transmission frame
- BCNDA : address of the device transmitting the beacon
- RAC#O, Ctrl#1 & Ctrl#2 timeslots : starting timeslots for these channels
- FrLenR & FrLenC : frame length of RAC and Control frames
- Transmission frameID : a modulo 64 counter that is updated every transmission frame
Further, a beacon is transmitted by hybrid devices in timeslot 0 according to an embodiment.

## Claims

1. A method for scheduling a transmission of messages within a wireless network, the method comprising:
scheduling a transmission of a first beacon message (535) to be transmitted by a first network device (101) within a first transmission frame (530), the first network device being comprised in the network;
scheduling a transmission of a second beacon message (542) to be transmitted by a second network device (102, 103) within a second transmission frame (533), the second network device being comprised in the network,
wherein the second transmission frame is to be transmitted after the first transmission frame and has to have a length equal to a length of the first transmission frame,
wherein the first beacon message is to be started at a beacon start time relative to a start time of the first transmission frame and
wherein the second beacon message is to be started at the beacon start time relative to the start time of the second transmission frame.

2. The method according to claim 1,
wherein the first beacon message comprises information indicative of an identity of the first network device and/or the second beacon message comprises information indicative of an identity of the second network device.

3. The method according to claim 1 or 2, wherein the first beacon message has a same length as the second beacon message.

4. The method according to one of claims 1 to 3, further comprising scheduling a transmission of a first control message (537) to be transmitted by the first network device within the first transmission frame and to be started at a control start time relative to the start time of the first transmission frame,
the first control message containing information directed to the second network device, in particular being indicative of a request of the first network device to communicate with the second network device or to provide network management and control information.

5. The method according to claim 4, further comprising scheduling a transmission of a second control message to be transmitted by the second network device within the second transmission frame and to be started at the control start time relative to the start time of the second transmission frame,
the second control message containing information directed to the first network device, the information in particular being indicative of a request of the second network device to communicate with the first network device or to provide network management and control information.

6. The method according to claim 5 wherein the second control message has a length equal to a length of the first control message.

7. The method according to claim 5 or 6, wherein the first beacon message comprises information indicative of whether the second network device is allowed to transmit the second control message within the first transmission frame at another control start time relative to the start time of the first transmission frame, the other control start time being different from the control start time at which the first control message (537) is scheduled to be transmitted by the first network device within the first transmission frame.

8. The method according to one of the preceding claims, further comprising scheduling the transmission of the first beacon message and scheduling the transmission of the second beacon message to be performed in an alternating manner such that the first beacon message is scheduled
to be transmitted by the first network device within a further transmission frame after the second transmission frame and
to be started at the beacon start time relative to a start time of the further transmission frame.

9. The method according to claim 8, further comprising
scheduling a transmission of a further beacon message to be transmitted by a further network device within the further transmission frame and to be started at the beacon start time relative to the start time of the further transmission frame, the further network device being comprised in the network; and
rescheduling the transmission of the first beacon message not to be transmitted by the first network device within the further transmission frame.

10. The method according to claim 9, wherein, when the further network device joins the network, rescheduling of the transmission of a beacon message is only performed for one other device, the first network device or the second network device.

11. The method according to one of the preceding claims, wherein the transmission of beacon messages is scheduled to be performed in a repetitive manner having a repetition period established by a number of consecutive transmission frames such that a number of beacon messages scheduled to be transmitted within the repetition period by each network device comprised within the network is at least one.

12. A method of a transmission of messages within a wireless network, the method comprising:
scheduling the transmission of messages according to one of claims 1 to 11; and
transmitting the messages according to the scheduling.

13. A network manager device for scheduling a transmission of messages within a wireless network, the network manager device comprising:
a transmitter for transmitting a scheduling message; and
a processor
for scheduling the transmission of the messages within the wireless network comprising a first network device and a second network device and
for generating the scheduling message based on the scheduling, wherein the processor is adapted such as
to schedule a transmission of a first beacon message to be transmitted by the first network device within a first transmission frame; and
to schedule a transmission of a second beacon message to be transmitted by the second network device within a second transmission frame,
wherein the second transmission frame is to be transmitted after the first transmission frame and has to have a length equal to a length of the first transmission frame,
wherein the first beacon message is to be started at a beacon start time relative to a start time of the first transmission frame and
wherein the second beacon message is to be started at the beacon start time relative the start time of the second transmission frame.

14. A communication system, comprising:
at least one network manager device (101, 102, 103) according to claim 14;
at least one other network device (101, 102, 103) configured to receive a scheduling message transmitted by the network manager device and capable to transmit a message according to the received scheduling message.
